# EUROPÄISCHE PATENTSCHRIFT

(11) **EP 0 866 813 B1**
(45) Veröffentlichungstag und Bekanntmachung des Hinweises auf die Patenterteilung: **16.06.1999**
(21) Anmeldenummer: 96942296.3
(22) Anmeldetag: 02.12.1996
(51) Int. Cl.: C08F 12/04

(54) **VERFAHREN ZUR HERSTELLUNG VON POLYMERISATEN VON VINYLAROMATISCHEN VERBINDUNGEN IN EINER STUFE UNTER VERWENDUNG VON DOPPELSCHNECKENEXTRUDERN**
PROCESS FOR THE PREPARATION OF POLYMERISATES OF VINYL AROMATIC COMPOUNDS IN A STAGE USING DOUBLE SCREW EXTRUDERS
PROCEDE DE PRODUCTION DE POLYMERISATS DE COMPOSES VINYLAROMATIQUES EN UNE SEULE ETAPE, AU MOYEN D'EXTRUDEUSES A DEUX VIS

(30) Priorität: 11.12.1995 DE 19546096
(43) Veröffentlichungstag der Anmeldung: 30.09.1998
(73) Patentinhaber: BASF AKTIENGESELLSCHAFT, 67056 Ludwigshafen (DE)
(72) Erfinder: WÜNSCH, Josef, D-67105 Schifferstadt (DE); HOFMANN, Jürgen, D-67069 Ludwigshafen (DE); KESSLER, Thomas, D-67105 Schifferstadt (DE); FISCHER, David, D-67161 Gönnheim (DE)
(86) Internationale Anmeldenummer: EP9605332
(87) Internationale Veröffentlichungsnummer: WO9721742

(56) Entgegenhaltungen:
- EP-A- 0 379 128
- EP-A- 0 522 641

## Beschreibung

Die vorliegende Erfindung betrifft Verfahren zur Herstellung von Polymerisaten von vinylaromatischen Verbindungen bei Temperaturen im Bereich von -80 bis 150°C in Gegenwart von Metallocenkatalysatorsystemen.

Weiterhin betrifft die vorliegende Erfindung die Verwendung der hierbei erhältlichen Polymerisate zur Herstellung von Fasern, Folien und Formkörpern sowie die hieraus erhältlichen Fasern, Folien und Formkörper.

Polymerisate von vinylaromatischen Verbindungen, insbesondere Polystyrole, finden aufgrund ihres Eigenschaftsprofils in vielen Bereichen Verwendung, beispielsweise als Verpackungsmaterialien oder als Isolierüberzüge für Metalle oder Kunststoffe, speziell bei elektrischen Anwendungen.

Die EP-A 584 646 beschreibt Verfahren zur Herstellung von syndiotaktischem Polystyrol in kontinuierlich betriebenen, horizontalen Reaktoren, wobei jedoch für eine effiziente Umsetzung der Monomeren mehrfach Katalysatormischung und Monomer zudosiert werden müssen. Ferner müssen die Aktivatoren getrennt vom Monomeren und vom Übergangsmetallkatalysator zudosiert werden.

Aus der EP-A 379 128 ist ebenfalls ein Verfahren zur Herstellung von syndiotaktischem Polystyrol in kontinuierlich betriebenen, horizontalen Reaktoren bekannt. Hierbei jedoch besteht beim Austrag aus dem Reaktor eine akute Gefahr des Verklebens, wodurch ein kontinuierlicher Betrieb nicht gewährleistet werden kann. Zudem ist der Selbstreinigungsgrad bei diesem Verfahren sehr niedrig.

Der vorliegenden Erfindung lag daher die Aufgabe zugrunde, neue Verfahren zur Herstellung von Polymerisaten von vinylaromatischen Verbindungen zur Verfügung zu stellen, die die genannten Nachteile nicht aufweisen und die insbesondere verfahrenstechnisch wenig aufwendig sind.

Demgemäß wurden Verfahren zur Herstellung von Polymerisaten von vinylaromatischen Verbindungen bei Temperaturen im Bereich von -80 bis 150°C in Gegenwart von Metallocenkatalysatorsystemen gefunden, wobei man in einer Stufe unter Verwendung eines gleichsinnigdrehenden, dichtkämmenden Doppelschneckenextruders polymerisiert.

Weiterhin wurde die Verwendung der hierbei erhältlichen Polymerisate zur Herstellung von Fasern, Folien und Formkörpern gefunden sowie die hieraus erhältlichen Fasern, Folien und Formkörper.

Als vinylaromatische Verbindungen eignen sich besonders Verbindungen der allgemeinen Formel I 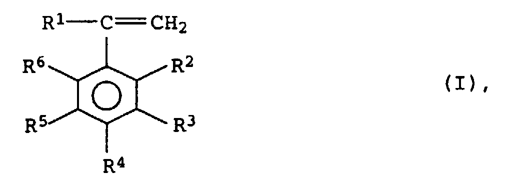 in der die Substituenten folgende Bedeutung haben:
- R¹: Wasserstoff oder C₁- bis C₄-Alkyl,
- R² bis R⁶: unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende cyclische Gruppen stehen.
Bevorzugt werden vinylaromatische Verbindungen der Formel I eingesetzt, in denen
- R¹: Wasserstoff bedeutet
und
- R² bis R⁶: für Wasserstoff, C₁- bis C₄-Alkyl, Chlor oder Phenyl stehen oder wobei zwei benachbarte Reste gemeinsam für 4 bis 12 C-Atome aufweisende cyclische Gruppen stehen, so daß sich als Verbindungen der allgemeinen Formel I beispielsweise Naphthalinderivate oder Anthracenderivate ergeben.

### Beispiele für solche bevorzugten Verbindungen sind:

Styrol, p-Methylstyrol, p-Chlorstyrol, 2,4-Dimethylstyrol, 4-Vinylbiphenyl, 2-Vinylnaphthalin oder 9-Vinylanthracen.

Es können auch Mischungen verschiedener vinylaromatischer Verbindungen eingesetzt werden, vorzugsweise wird jedoch nur eine vinylaromatische Verbindung verwendet.

Besonders bevorzugte vinylaromatische Verbindungen sind Styrol und p-Methylstyrol.

Die Herstellung von vinylaromatischen Verbindungen der allgemeinen Formel I ist an sich bekannt und beispielsweise in Beilstein 5, 367, 474, 485 beschrieben.

Bei den erfindungsgemäßen Verfahren werden als Metallocenkomplexe A) vorzugsweise solche der allgemeinen Formel II 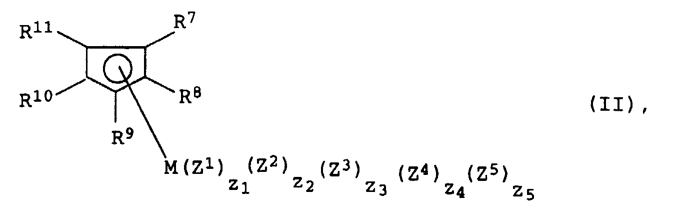 in der die Substituenten und Indices folgende Bedeutung haben:
- R⁷ bis R¹¹: Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste gemeinsam für 4 bis 15 C-Atome aufweisende cyclische Gruppen stehen können, oder Si(R¹²)₃,
- mit R¹²: C₁- bis C₁₀-Alkyl, C₆- bis C₁₅-Aryl oder C₃- bis C₁₀-Cycloalkyl,
- M: ein Metall der III. bis VI. Nebengruppe des Periodensystems der Elemente oder ein Metall der Lanthanidenreihe
- Z¹ bis Z⁵: Wasserstoff, Halogen, C₁- bis C₁₀-Alkyl, C₆- bis C₁₅-Aryl, C₁- bis C₁₀-Alkoxy oder C₁- bis C₁₅-Aryloxy
und
- z₁ bis z₅: 0, 1, 2, 3, 4 oder 5, wobei die Summe z₁+z₂+z₃+z₄+z₅ der Wertigkeit von M abzüglich der Zahl 1 entspricht,
eingesetzt.

Besonders bevorzugte Metallocenkomplexe der allgemeinen Formel II sind solche, in denen
- M: für ein Metall der IV. Nebengruppe des Periodensystems der Elemente steht, also für Titan, Zirkonium oder Hafnium, insbesondere für Titan
und
- Z¹ bis Z⁵: C₁- bis C₁₀-Alkyl, C₁- bis C₁₀-Alkoxy oder Halogen bedeuten.

### Beispiele für solche bevorzugten Metallocenkomplexe sind:

Pentamethylcyclopentadienyltitantrichlorid, Pentamethylcyclopentadienyltitantrimethyl und Pentamethylcyclopentadienyltitantrimethylat.

Es können auch solche Metallocenkomplexe, wie in der EP-A 584 646 beschrieben, eingesetzt werden.

Mischungen verschiedener Metallocenkomplexe können auch eingesetzt werden.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Als metalloceniumionenbildende Verbindung B) können die Katalysatorsysteme offenkettige oder cyclische Alumoxanverbindungen enthalten.

Geeignet sind beispielsweise offenkettige oder cyclische Alumoxanverbindungen der allgemeinen Formel IV oder V 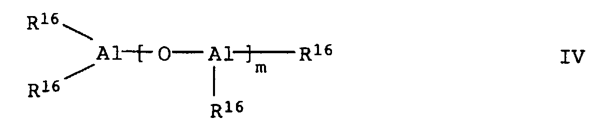 oder 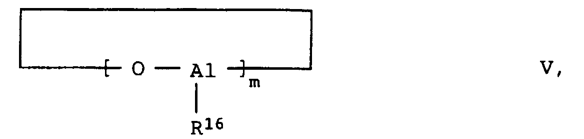 wobei
- R¹⁶: eine C₁- bis C₄-Alkylgruppe bedeutet, bevorzugt Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis 10⁶:1, insbesondere im Bereich von 10:1 bis 10⁴:1, liegt.

Als metalloceniumionenbildende Verbindung B) können auch Koordinationskomplexverbindungen, ausgewählt aus der Gruppe der starken, neutralen Lewissäuren, der ionischen Verbindungen mit lewissauren Kationen und der ionischen Verbindungen mit Brönstedsäuren als Kationen eingesetzt werden.

Als starke neutrale Lewissäuren sind Verbindungen der allgemeinen Formel VI

M¹X¹X²X³ VI

bevorzugt, in der
- M¹: ein Element der III. Hauptgruppe des Periodensystems bedeutet, insbesondere B, Al oder Ga, vorzugsweise B,
- X¹,X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel VI, in der X¹, X² und X³ gleich sind, vorzugsweise Tris(pentafluorphenyl)boran. Diese Verbindungen sowie Verfahren zu ihrer Herstellung sind an sich bekannt und beispielsweise in der WO 93/3067 beschrieben.

Als ionische Verbindungen mit lewissauren Kationen sind Verbindungen der allgemeinen Formel VII

[(Y^{a+})Q₁Q₂...Q_{z}]^{d+} VII

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht,
- z: für ganze Zahlen von 0 bis 5
- d: der Differenz a - z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen.

Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 93/3067 genannt, bevorzugtes Kation ist das N,N-Dimethylanilinium.

Es hat sich als besonders geeignet erwiesen, wenn das molare Verhältnis von Bor aus der metalloceniumionenbildenden Verbindung zu Übergangsmetall aus dem Metallocenkomplex im Bereich von 0,1:1 bis 10:1 liegt, insbesondere im Bereich von 1:1 bis 5:1.

Das bei dem erfindungsgemäßen Verfahren eingesetzte Katalysatorsystem enthält als Komponente C) eine Aluminiumverbindung der allgemeinen Formel III

AlR¹³R¹⁴R¹⁵ (III),

in der
- R¹³ bis R¹⁵: für Fluor, Chlor, Brom, Jod oder C₁- bis C₁₂-Alkyl stehen, bevorzugt für C₁- bis C₈-Alkyl
enthalten.

Vorzugsweise sind die Reste R¹³ bis R¹⁵ gleich und stehen für Methyl, Ethyl, Isobutyl oder n-Hexyl.

Bevorzugt ist die Komponente C) in einer Menge von 2000 : 1 bis 1 : 1, insbesondere 800 : 1 bis 10 : 1 (molares Verhältnis Al aus III zu Übergangsmetall aus II) im Katalysatorsystem enthalten.

Als Lösungsmittel für die Metallocenkomplexe werden üblicherweise aromatische Kohlenwasserstoffe eingesetzt, bevorzugt mit 6 bis 20 C-Atomen, insbesondere Xylole und Toluol sowie deren Mischungen.

Die Metallocenkomplexe können ungeträgert oder geträgert eingesetzt werden.

Geeignete Trägermaterialien sind beispielsweise Kieselgele, bevorzugt solche der Formel SiO₂ · bAl₂O₃, worin b für eine Zahl im Bereich von 0 bis 2 steht, vorzugsweise 0 bis 0,5; also im wesentlichen Alumosilikate oder Siliciumdioxid. Vorzugsweise weisen die Träger einen Teilchendurchmesser im Bereich von 1 bis 200 µm auf, insbesondere 30 bis 80 µm. Derartige Produkte sind im Handel erhältlich, z.B. als Silica Gel 332 der Firma Grace.

Weitere Träger sind u.a. feinteilige Polyolefine, beispielsweise feinteiliges Polypropylen oder Polyethylen, aber auch Polyethylenglycol, Polybutylenterephthalat, Polyethylenterephthalat, Polyvinylalkohol, Polystyrol, Polybutadien, Polycarbonate oder deren Copolymere.

Das erfindungsgemäße Verfahren wird in einer Stufe unter Verwendung eines gleichsinnigdrehenden, dichtkämmenden und damit selbstreinigenden Doppelschneckenextruder durchgeführt.

Die Reaktionstemperatur liegt zwischen -80 und 150°C, bevorzugt zwischen 0° und 120°C. Es ist aber auch möglich, daß ein Temperaturgradient von 0 bis 120°C über temperierbare Gehäuseummantelungen um das Reaktionsrohr angelegt wird.

Der Extruder kann aus mehreren Einzelzonen bestehen, die unterschiedlich temperiert werden können.

Der Außendurchmesser der gleichsinnigdrehenden, bevorzugt zweigängigen Knet- und Förderelemente der Doppelschneckenextruder liegt vorzugsweise im Bereich von 25 bis 70 mm, insbesondere 30 bis 58 mm.

Die freien Spalträume zwischen Extrudergehäuse und Schneckenelement liegen im Bereich von 0,2 bis 0,8 mm, insbesondere 0,3 bis 0,5 mm.

Die Schneckendrehzahl kann im Bereich von 3 bis 500 Umdrehungen pro Minute liegen, vorzugsweise 5 bis 30 Umdrehungen pro Minute.

Die mittlere Verweilzeit im Extruder kann 0,1 bis 240 Minuten betragen, vorzugsweise 2 bis 20 Minuten.

Die mittlere Verweilzeit im Extruder kann über die Anzahl der Gehäuseblöcke reguliert werden. Die Anzahl der Gehäuseblöcke liegt vorzugsweise im Bereich von 6 bis 20, insbesondere von 8 bis 12. Besonders bevorzugt werden 10 Gehäuseblöcke verwendet, wobei im ersten Gehäuseblock eine Rückentgasung stattfindet, in den zweiten die Einsatzstoffe dosiert werden, die Gehäuseblöcke 3 bis 8 sind ReaktionsgehäuseblÖcke, die Gehäuseblöcke 9 und 10 können mit anderer Temperatur beheizt werden und der Gehäuseblock 10 dient als Austragsgehäuse.

Vorzugsweise wird das erfindungsgemäße Verfahren so durchgeführt, daß die vinylaromatische Verbindung, die metalloceniumionenbildende Verbindung B) und die Aluminiumverbindung C) unter Inertgasatmosphäre gemischt und auf den ersten Gehäuseblock des Extruders zudosiert werden. Parallel dazu kann ebenfalls auf den ersten Gehäuseblock (Zone) eine Lösung oder Suspension des Metallocenkomplexes A) zudosiert werden.

Als Lösung- bzw. Suspensionsmittel sind cyclische und acyclische Kohlenwasserstoffe wie Butane, Pentane, Hexane oder Heptane zu nennen, weiterhin aromatische Kohlenwasserstoffe wie Benzol, Toluol oder Ethylbenzol sowie sauerstoffhaltige Kohlenwasserstoffe wie Tetrahydrofuran, halogenhaltige Kohlenwasserstoffe wie Dichlormethan oder stickstoffhaltige Kohlenwasserstoffe wie N-Methylpiperidin sowie Mischungen hiervon.

Vorzugsweise wird die Dosiermenge so gewählt, daß 500 bis 2000 g/h der Mischung aus vinylaromatischer Verbindung, Komponenten B) und C) zugeführt werden und 100 bis 200 cm³/h an der Lösung oder Suspension des Metallocenkomplexes.

Die Polymerisation wird vorzugsweise in der vinylaromatischen Verbindung als Reaktionsmedium, d.h. in Masse durchgeführt.

Das erfindungsgemäße Verfahren ist technisch einfach durchführbar, es werden hohe Umsätze erzielt, die Gefahr des Verklebens bzw. des Zuwachsens der Austrittsöffnungen des Extruders ist gering und die entstehenden Polymerisate sind syndiotaktisch und eignen sich insbesondere zur Verwendung als Formmassen in elektrischen oder hochtemperaturbeständigen Anwendungen.

### Beispiele

- Beispiele 1 bis 4:: Herstellung von syndiotaktischem Polystyrol (s-PS)
- Beispiele 1 und 2:: Herstellung von s-PS mit Methylaluminoxan (MAO)

### Beispiel 1

12,0 kg Styrol (115,2 mol) wurden mit 1,642 kg MAO (2,881 mol) (Fa. Witco) und 1,427 kg Triisobutylaluminium (1,440 mol) (Fa. Witco) unter Inertgas (Stickstoff) gemischt und mit einer Zahnrad-Dosierpumpe (Fa. Feinprüf) in einem Doppelschneckenextruder ZE 40A (Fa. Berstorff) mit einer Menge von 1 kg Mischung/h zudosiert. Die Temperatur am ersten Gehäuseblock betrug 61°C und wurde über alle 10 Gehäuseblöcke konstant gehalten. Parallel zur Zudosierung dieser Mischung wurde ebenfalls auf den ersten Gehäuseblock 2,1912 g (0,0096 mol) (Pentamethylcyclopentadienyl)trimethyltitan, gelöst in 1,2 1 Toluol, mit einer LEWA-Kolbenpumpe (Fa. M3) mit einer Menge von 100 ml Lösung/h zudosiert.

Am Kopfende des Extruders wurde das entstandene s-PS als Pulver entnommen.

### Beispiel 2

Es wurde wie in Beispiel 1 gearbeitet, jedoch betrug die Temperatur am zweiten Gehäuseblock 61°C und wurde über 6 Gehäuseblöcke konstant gehalten, an den beiden letzten Gehäuseblöcken betrug die Temperatur 100°C.
- Beispiele 3 und 4:: Herstellung von s-PS mit Tris(pentafluorphenyl)boran

### Beispiel 3

12,0 kg Styrol (115,2 mol) wurden mit 4,903 g Tris(pentafluorphenyl)boran (0,0096 mol) und 95,19 g Triisobutylaluminium (0,48 mol) (Fa. Witco) unter Inertgas (Stickstoff) gemischt und mit einer Zahnrad-Dosierpumpe (Fa. Feinprüf) in einem Doppelschneckenextruder ZE 40A (Fa. Berstorff) mit einer Menge von 1 kg Mischung/h zudosiert. Die Temperatur am ersten Gehäuseblock betrug 61°C und wurde über alle 10 Gehäuseblöcke konstant gehalten. Parallel zur Zudosierung dieser Mischung wurde ebenfalls auf den ersten Gehäuseblock 2,1912 g (0,0096 mol) (Pentamethylcyclopentadienyl)trimethyltitan, gelöst in 1,2 1 Toluol, mit einer LEWA-Kolbenpumpe (Fa. 3M) mit einer Menge von 100 ml Losung/h zudosiert.

Am Kopfende des Extruders wurde das entstandene s-PS als Pulver entnommen.

### Beispiel 4

Es wurde wie in Beispiel 3 gearbeitet, jedoch betrug die Temperatur am zweiten Gehäuseblock 61°C und wurde über 6 Gehäuseblöcke konstant gehalten, an den beiden letzten Gehäuseblöcken betrug die Temperatur 100°C.

Über den Umsatz und die Polymereigenschaften gibt die nachfolgende Tabelle Aufschluß.

Die Molekulargewichte M_{w} (Gewichtsmittelwert) und Mₙ (Zahlenmittelwert) wurden durch Gelpermeationschromatographie mit 1,2,4-Trichlorbenzol als Lösungsmittel bei 135°C bestimmt. Die Kalibrierung erfolgte mit engverteilten Polystyrolstandards. Der syndiotaktische Anteile wurde durch ¹³C-NMR bestimmt.

| Beispiel | Umsatz [%] | M_{w} | M_{w}/Mₙ | syndiotaktischer Anteil [%] |
|---|---|---|---|---|
| 1 | 79 | 121.000 | 1,77 | 99,2 |
| 2 | 84 | 264.000 | 2,09 | 99,6 |
| 3 | 73 | 262.000 | 2,13 | 97,1 |
| 4 | 82 | 298.000 | 1,99 | 98,1 |

## Patentansprüche

1. Verfahren zur Herstellung von Polymerisaten von vinylaromatischen Verbindungen bei Temperaturen im Bereich von -80 bis 150°C in Gegenwart von Metallocenkatalysatorsystemen, dadurch gekennzeichnet, daß man in einer Stufe unter Verwendung eines gleichsinnigdrehenden, dichtkämmenden Doppelschneckenextruders polymerisiert.

2. Verfahren nach Anspruch 1, dadurch gekennzeichnet, daß als vinylaromatische Verbindungen Verbindungen der allgemeinen Formel I 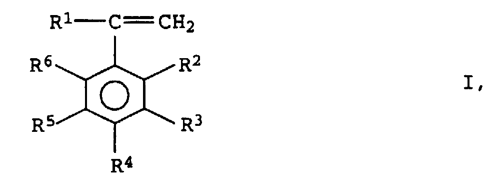 in der die Substituenten folgende Bedeutung haben:
R¹ Wasserstoff oder C₁- bis C₄-Alkyl,
R² bis R⁶ unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende cyclische Gruppen stehen,
eingesetzt werden.

3. Verfahren nach den Ansprüchen 1 bis 2, dadurch gekennzeichnet, daß als Metallocenkatalysatorsysteme solche verwendet werden, die als aktive Bestandteile
A) Metallocenkomplexe der allgemeinen Formel II 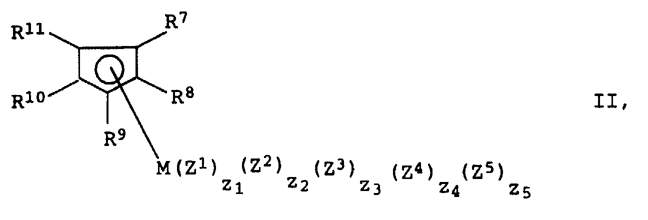 in der die Substituenten und Indices folgende Bedeutung haben:
R⁷ bis R¹¹ Wasserstoff, C₁- bis C₁₀-Alkyl, 5- bis 7gliedriges Cycloalkyl, das seinerseits C₁-bis C₆-Alkylgruppen als Substituenten tragen kann, C₆- bis C₁₅-Aryl oder Arylalkyl und wobei gegebenenfalls auch zwei benachbarte Reste gemeinsam für 4 bis 15 C-Atome aufweisende cyclische Gruppen stehen können, oder Si(R¹²)₃,
mit R¹² C₁- bis C₁₀-Alkyl, C₆- bis C₁₅-Aryl oder C₃-bis C₁₀-Cycloalkyl,
M ein Metall der III. bis VI. Nebengruppe des Periodensystems der Elemente oder ein Metall der Lanthanidenreihe
Z¹ bis Z⁵ Wasserstoff, Halogen, C₁- bis C₁₀-Alkyl, C₆-bis C₁₅-Aryl, C₁- bis C₁₀-Alkoxy oder C₁- bis C₁₅-Aryloxy
und
z₁ bis z₅ 0, 1, 2, 3, 4 oder 5, wobei die Summe z₁+z₂+z₃+z₄+z₅ der Wertigkeit von M abzüglich der Zahl 1 entspricht,
B) eine metalloceniumionenbildende Verbindung
und
C) eine Aluminiumverbindung der allgemeinen Formel III
AlR¹³R¹⁴R¹⁵ III,
in der
R¹³ bis R¹⁵ für Fluor, Chlor, Brom, Iod oder C₁- bis C₁₂-Alkyl stehen,
enthalten.

4. Verfahren nach den Ansprüchen 1 bis 3, dadurch gekennzeichnet, daß als metalloceniumionenbildende Verbindung B) offenkettige oder cyclische Alumoxanverbindungen der allgemeinen Formel IV oder V 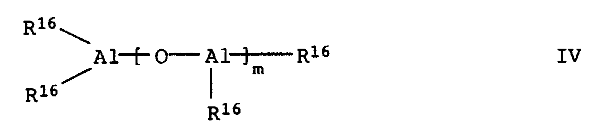 oder 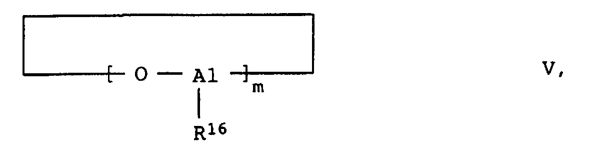 wobei
R¹⁶ eine C₁- bis C₄-Alkylgruppe bedeutet und m für eine ganze Zahl von 5 bis 30 steht,
eingesetzt werden.

5. Verfahren nach den Ansprüchen 1 bis 3, dadurch gekennzeichnet, daß als metalloceniumionenbildende Verbindung B) eine Koordinationskomplexverbindung, ausgewählt aus der Gruppe der starken, neutralen Lewissäuren, der ionischen Verbindungen mit lewissauren Kationen und der ionischen Verbindungen mit Brönsted-Säuren als Kationen eingesetzt wird.

6. Verwendung der gemäß den Ansprüchen 1 bis 5 hergestellten polymerisate zur Herstellung von Fasern, Folien und Formkörpern.

7. Fasern, Folien und Formkörper, erhältlich aus den gemäß den Ansprüchen 1 bis 5 hergestellten Polymerisaten als wesentliche Komponente.

## Claims

1. A process for the preparation of polymers of vinylaromatic compounds at from -80 to 150°C in the presence of metallocene catalyst systems, wherein polymerization is carried out in one stage with the use of a closely intermeshing twin-screw extruder having corotating screws.

2. A process as claimed in claim 1, wherein the vinylaromatic compounds used are compounds of the formula I 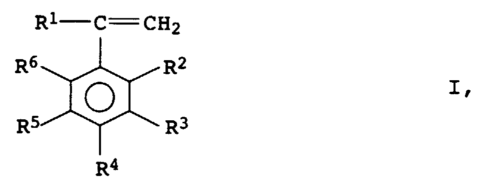 where
R¹ is hydrogen or C₁-C₄-alkyl, and
R² to R⁶, independently of one another, are each hydrogen, C₁-C₁₂-alkyl, C₆-C₁₈-aryl or halogen or two neighboring radicals together form a cyclic group of 4 to 15 carbon atoms.

3. A process as claimed in claims 1 and 2, wherein the metallocene catalyst systems used are those which contain, as active components,
A) metallocene complexes of the formula II 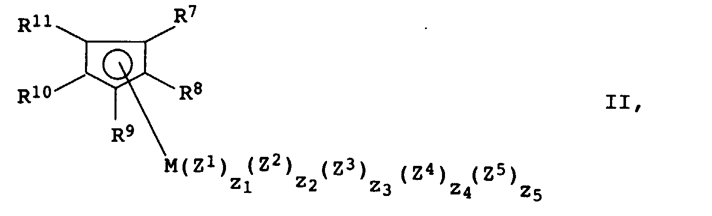 where
R⁷ to R¹¹ are each hydrogen, C₁-C₁₀-alkyl, 5- to 7-membered cycloalkyl, which in turn may carry C₁-C₆-alkyl groups as substituents, or C₆-C₁₅-aryl or arylalkyl, or two neighboring radicals together may furthermore form a cyclic group of 4 to 15 carbon atoms, or Si(R¹²)₃,
R¹² is C₁-C₁₀-alkyl, C₆-C₁₅-aryl or C₃-C₁₀-cycloalkyl,
M is a metal of subgroup III to VI of the Periodic Table of the Elements or a metal of the lanthanide series,
Z¹ to Z⁵ are each hydrogen, halogen, C₁-C₁₀-alkyl, C₆-C₁₅-aryl, C₁-C₁₀-alkoxy or C₁-C₁₅-aryloxy
and
z₁ to z₅ are each 0, 1, 2, 3, 4 or 5, the sum z₁+z₂+z₃+z₄+z₅ corresponding to the valency of M minus 1,
B) a compound forming metallocenium ions
and
C) an aluminum compound of the formula III
AlR¹³R¹⁴R¹⁵ III,
where
R¹³ to R¹⁵ are each fluorine, chlorine, bromine, iodine or C₁-C₁₂-alkyl.

4. A process as claimed in any of claims 1 to 3, wherein an open-chain or cyclic aluminoxane compound of the formula IV or V 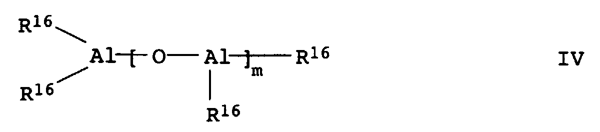 or 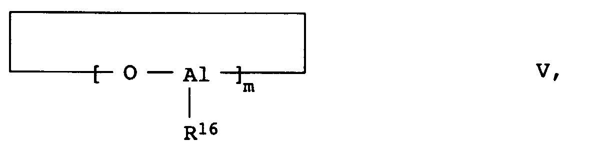 where
R¹⁶ is C₁-C₄-alkyl and m is an integer from 5 to 30,
is used as compound B) forming metallocenium ions.

5. A process as claimed in any of claims 1 to 3, wherein a coordination complex selected from the group consisting of the strong, neutral Lewis acids, the ionic compounds having Lewis acid cations and the ionic compounds having Brönsted acids as cations is used as compound B) forming metallocenium ions.

6. The use of a polymer prepared as claimed in any of claims 1 to 5 for the production of fibers, films and moldings.

7. A fiber, film or molding obtainable from a polymer prepared as claimed in any of claims 1 to 5 as an essential component.

## Revendications

1. Procédé de préparation de polymères de composés vinylaromatiques à des températures de l'ordre de -80 à 150°C en présence de systèmes catalytiques à base de métallocène, caractérisé en ce qu'on polymérise en une seule étape avec utilisation d'une extrudeuse à vis double tournant dans le même sens, étroitement entrecroisée.

2. Procédé suivant la revendication 1, caractérisé en ce que, comme composés vinylaromatiques, on met en oeuvre des composés de la formule générale I : 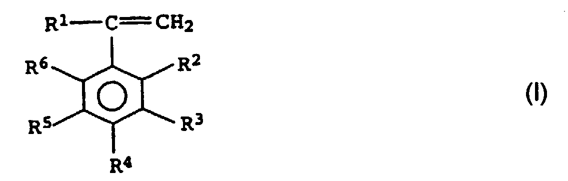 dans laquelle les substituants ont la signification suivante :
R¹ représente de l'hydrogène ou un alkyle en C₁-C₄,
R² à R⁶ représentent indépendamment l'un de l'autre de l'hydrogène, de l'alkyle en C₁-C₁₂, de l'aryle en C₆-C₁₈, de l'halogène, ou deux radicaux voisins représentent conjointement des groupes cycliques présentant 4 à 15 atomes de C.

3. Procédé suivant l'une des revendications 1 et 2, caractérisé en ce que, comme systèmes catalytiques à base de métallocène, on utilise ceux qui, comme composants actifs, contiennent
A) des complexes de métallocéne de la formule générale II: 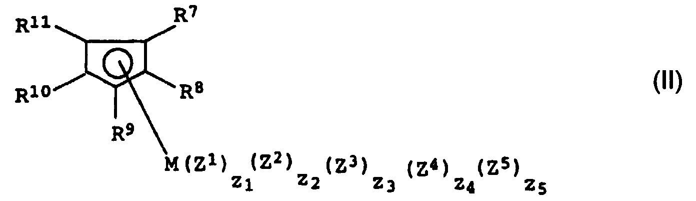 dans laquelle les substituants et indices ont la signification suivante :
R⁷ à R¹¹ représentent de l'hydrogène, de l'alkyle en C₁-C₁₀, du cycloalkyle pentagonal à heptagonal, qui à son tour peut porter des groupes alkyle en C₁-C₆ comme substituants, de l'arylalkyle ou de l'aryle en C₆-C₁₅, deux radicaux voisins pouvant également éventuellement représenter conjointement des groupes cycliques présentant 4 à 15 atomes de C, ou Si(R¹²)₃,
où R¹² représente un alkyle en C₁ à C₁₀, un aryle en C₆ à C₁₅ ou un cycloalkyle en C₃-C₁₀,
M représente un métal des groupes secondaires III à VI du système périodique des éléments ou un métal de la série des lanthanides,
Z¹ à Z⁵ représentent de l'hydrogène, un halogène, un alkyle en C₁-C₁₀, un aryle en C₆-C₁₅, un alcoxy en C₁-C₁₀ ou un aryloxy en C₁-C₁₅, et
z₁ à z₅ représentent 0, 1, 2, 3, 4 ou 5, la somme z₁+z₂+z₃+z₄+z₅ correspondant à la valence de M moins le nombre 1,
B) un composé générateur d'ions métallocénium,
et
C) un composé d'aluminium de la formule générale III :
AlR¹³R¹⁴R¹⁵ (III),
dans laquelle R¹³ à R¹⁵ représentent du fluor, du chlore, de brome, de l'iode ou un alkyle en C₁-C₁₂.

4. Procédé suivant l'une des revendications 1 à 3, caractérisé en ce que, comme composé B) générateur d'ions métallocénium, on met un oeuvre des composés d'alumoxane à chaîne ouverte ou cycliques répondant à la formule générale IV ou V : 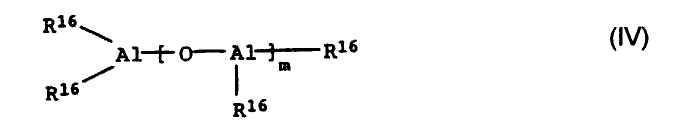 ou 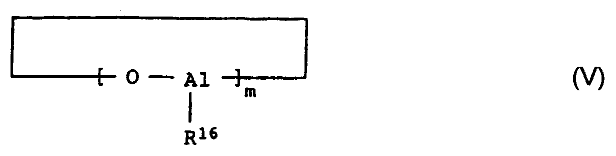 dans lesquelles R¹⁶ représente un groupe alkyle en C₁-C₄ et m représente un nombre entier de 5 à 30.

5. Procédé suivant l'une des revendications 1 à 3, caractérisé en ce que, comme composé B) générateur d'ions métallocénium, on met en oeuvre un composé complexe de coordination choisi parmi le groupe des acides de Lewis neutres, forts, des composés ioniques avec des cations d'acide de Lewis, et des composés ioniques avec des acides de Brönsted comme cations.

6. Utilisation des polymères préparés selon les revendications 1 à 5 pour la préparation de fibres, de feuilles et de corps moulés.

7. Fibres, feuilles et corps moulés, que l'on peut obtenir à partir des polymères préparés suivant l'une des revendications 1 à 5, comme composants essentiels.
